# EUROPÄISCHE PATENTSCHRIFT

(11) **EP 0 902 901 B1**
(45) Veröffentlichungstag und Bekanntmachung des Hinweises auf die Patenterteilung: **18.07.2001**
(21) Anmeldenummer: 97925975.1
(22) Anmeldetag: 02.06.1997
(51) Int. Cl.: G01V 15/00

(54) **ORTBARES TRASSENBAND ZUM AUFFINDEN VON IM ERDBODEN VERGRABENEN, INSBESONDERE NICHTMETALLISCHEN LEITUNGEN**
LOCATABLE LOCATING TAPE FOR FINDING IN PARTICULAR NON-METALLIC CABLES AND PIPELINES BURIED IN THE GROUND
RUBAN DE SIGNALISATION REPERABLE SERVANT A IDENTIFIER DES CABLES ET DES CONDUITES NOTAMMENT NON METALLIQUES ENFOUIS DANS LE SOL

(30) Priorität: 03.06.1996 DE 29609798 U
(43) Veröffentlichungstag der Anmeldung: 24.03.1999
(73) Patentinhaber: Kelmaplast, G. Kellermann GmbH, 45549 Sprockhövel (DE)
(72) Erfinder: KOHLSTADT, Klaus, D-45549 Sprockhövel (DE)
(74) Vertreter: Mentzel, Norbert, Dipl.-Phys.
(86) Internationale Anmeldenummer: EP9702847
(87) Internationale Veröffentlichungsnummer: WO9734165

(56) Entgegenhaltungen:
- DE-U- 8 410 500
- FR-A- 2 126 607
- US-A- 4 699 838

## Beschreibung

Die Erfindung richtet sich auf Trassenbänder der im Oberbegriff des Anspruches 1 angegebenen Art. Trassenbänder ermöglichen die Ortung nichtmetallischer Leitungen oder Kabel im Erdboden mit Hilfe geeigneter Ortungsgeräte. Werden die Trassenbänder entlang der im Erdboden befindlichen Leitung verlegt, so kann der Verlauf der Leitung im Erdboden durch ein passives Ortungsverfahren ermittelt werden. Ohne solche Trassenbänder wären z. B. metallfreie Lichtwellenleiter-Kabel oder Gasleitungen aus Kunststoff bei Tiefbauarbeiten einer erheblichen Gefahr von Beschädigungen ausgesetzt. Beschädigungen können schwere Unfälle hervorrufen und hohe Kosten bei der Beseitigung der Schadensfolgen verursachen.

Das bekannte Trassenband (DE 84 10 500.3 U) verwendet als Bandkörper zwei aufeinanderliegende Kunststoffbahnen, zwischen denen, im Bandinneren, zwei metallische Leiter aus nichtrostendem Stahl angeordnet sind. Dieser Leiter steht mit dem Erdboden in elektrisch leitendem Kontakt, wobei der Edelstahl die befürchtete Korrosion im Erdboden, wie sie bei anderen Metallen auftritt, verhindern soll. Man war der Ansicht, daß man aus Korrosionsgründen Kupfer in Trassenbändern nicht verwenden dürfe. Die metallischen Leiter machen das Trassenband und damit die parallel dazu verlaufende Leitung durch ein auf Magnetfelder ansprechendes Ortungsgerät im Erdboden lokalisierbar. Weltweit werden an mehreren Orten für spezielle Funkdienste Längstwellensender betrieben, die in einem Frequenzbereich von 3 bis 30 kHz arbeiten, was einer Wellenlänge der elektromagnetischen Wellen von 10 bis 100 km entspricht. Dieser Frequenzbereich wird mit VLF bezeichnet. Die Längstwellen dringen in den Boden ein und breiten sich über viele tausend Kilometer aus. Das elektromagnetische Feld dieser externen Sender bewirkt im Erdboden einen elektrischen Stromfluß, der bevorzugt in die erdfühlig im Trassenband angeordneten metallischen Leiter übergeht und dort mit zunehmender Leitungslänge anwächst. Der so im Leiter entstehende Wechselstrom erzeugt ein magnetisches Feld um den Leiter, das mit einem Ortungsgerät erfaßt werden kann. Die bekannten Trassenbänder haben aber mehrere Nachteile.

Die Ortungsgenauigkeit der bekannten Trassenbänder ist unbefriedigend, was sich insbesondere dann bemerkbar macht, wenn die zusammen mit den zuordbaren Leitungen verlegten Trassenbänder in größerer Tiefe im Erdboden verlaufen. Ferner lassen sich kurze Trassenbänder schwer detektieren, weil das Strömungsfeld im Boden erst nach einer größeren Länge des Trassenbandes sich in ausreichendem Maß im Leiter sammelt und zu einem detektierbaren Magnetfeld um den Leiter führt. Schließlich sind stets die Endbereiche eines verlegten Trassenbandes nicht ortbar.

Der Erfindung liegt die Aufgabe zugrunde, ein Trassenband der im Oberbegriff des Anspruches 1 genannten Art zu entwickeln, das zu seiner Ortbarkeit über bessere Eigenschaften verfügt. Dies wird erfindungsgemäß durch die im kennzeichnenden Teil des Anspruches 1 genannten Maßnahmen erreicht, denen folgende besondere Bedeutung zukommt.

Die Erfindung tritt zunächst dem bestehenden Vorurteil entgegen, die im Erdboden auftretende Korrosion erfordere Edelstahl und erlaube nicht die Verwendung von Kupfer als Leiterwerkstoff. Aufgrund einer Vielzahl von Langzeituntersuchungen hat die Erfindung erkannt, daß die Korrosionsgefährdung von Kupferleitungen im Erdboden im allgemeinen gering ist und selbst unter kritisch angesehenen Bedingungen selten auftritt. Die Erfindung stellt überraschenderweise fest, daß bei Anwendung von Kupferleitern im Trassenband das Strömungsfeld im Erdboden viel schneller und intensiver sich im Kupferleiter sammelt und daher dort zu einem wesentlich höheren Stromfluß führt. Das mag damit zusammenhängen, daß Kupfer eine wesentlich bessere Leitfähigkeit gegenüber Stahl besitzt. Die Strömungslinien im Erdboden gehen bevorzugt in den Kupferleiter über und führen gegenüber dem bekannten Trassenband zu einer um den Faktor 10 größeren Anzeige im Meßgerät. Damit lassen sich auch tief verlegte, mit Trassenbändern versehene Leitungen gut orten. Eine einwandfreie Ortung ist bei der Erfindung auch bei Trassenbändern kurzer Länge und in großer Annäherung an die sonst nur sehr schwer detektierbaren Trassenenden möglich.

Eine weitere Steigerung der Meßgehauigkeit erhält das passive Ortungsverfahren bei der Erfindung, weil neben dem nicht umhüllten blanken Leiter im Trassenband, der in elektrischem Erdkontakt mit dem Erdboden steht, sich wenigstens ein weiterer Leiter befindet, der mit einer elektrischen Isolationsschicht umgeben ist. Die Erfindung hat nämlich erkannt, daß ein solcher ummantelter Leiter beim passiven Ortungsverfahren mitwirkt. Der ummantelte Leiter steht mit dem umgebenden Erdboden in kapazitiver Verbindung. Dadurch ergibt sich eine kapazitive Kopplung zwischen dem Erdboden und dem ummantelten Kupferleiter. Der durch die kapazitive Kopplung im isolierten Kupferleiter erzeugte Strom, der offenbar durch Influenzwirkungen entsteht, führt zu einem additiven Magnetfeld, das vom Ortungsgerät zusätzlich zu dem im blanken Kupferleiter wirkenden Effekt erfaßt wird. Damit ergibt sich, daß beim erfindungsgemäßen Trassenband durch die Kombination zwischen dem blanken Leiter einerseits und einem oder mehreren ummantelten Leitern andererseits die Ortbarkeit verbessert wird.

Außerdem erlaubt das erfindungsgemäße Trassenband auch die Anwendung neuer aktiver Ortungsverfahren, die nicht nur alternativ, sondern vor allem an den bei der passiven Ortung kritischen Stellen eingesetzt werden können. Das aktive Ortungsverfahren wird durch eine galvanische oder durch eine induktive Ankopplung wird an dem isolierten, ummantelten Leiter vollzogen. Man verwendet eine interne Quelle für die zu liefernde Meßenergie. Zur galvanischen Ankopplung wird der isolierte Leiter an wenigstens einem abisolierten Ende mit einer internen Stromquelle verbunden, die einen Strom im metallischen Leiter erzeugt, dessen Magnetfeld wieder von einem Ortungsgerät ermittelt wird. Bei der induktiven Ankopplung wird ein Wechselfeld von einem Generator über eine den ummantelten Leiter ringförmig umschließende stromführende Zange oder über eine in den Bereich des ummantelten Kupferleiters gebrachte Spule induziert. Die Enden des Leiters sind dabei, z. B. durch Erdschluß oder elektrischen Leitungen, miteinander verbunden und es fließt ein Strom im Kupferleiter des Trassenbandes. Man kann ein auf das Magnetfeld um den ummantelten Kupferleiter ansprechende Ortungsgerät wieder nutzen. Wegen der gezielten Einspeisung der Meßenergie in den ummantelten Leiter sind die aktiven Ortungsverfahren besonders wirkungsvoll und genau. Das aktive Ortungsverfahren ist auch bei kurzen Trassenbändern anwendbar und gerade im Anfangsbereich des Trassenbandes besonders wirkungsvoll, wo daß passive Ortungsverfahren versagt. Diese aktiven Ortungsverfahren sind am blanken erdfühlig verlegten Kupferleiter nicht wirksam. Bekannte Trassenbänder mit blanken Leitern aus Edelstahl konnten nicht genutzt werden.

Besonders wirkungsvoll ist das erfindungsgemäße Trassenband, wenn man ein Leitungs-Paar aus zwei isolierten, ummantelten Leitern verwendet. Dadurch erhält man nicht nur eine Verbesserung des aktiven und eine Steigerung des passiven Ortungsverfahrens, sondern kann damit eine etwaige Beschädigung des Trassenbandes deduzieren und lokalisieren. Man benutzt das Leitungs-Paar zur Einleitung eines elektromagnetischen Impulses, der an einer Bruchstelle des Leiters im Band zu einer Reflexion des Impulses führt. Man erhält ein Impuls-Echo, das mit Hilfe eines auf Reflexionsmessungen ansprechenden Meßgerätes die beschädigte Stelle im Trassenband genau zu lokalisieren gestattet. Man kann dann an dieser Stelle schnell und bequem die beschädigte Stelle reparieren und das Trassenband wieder funktionsfähig machen.

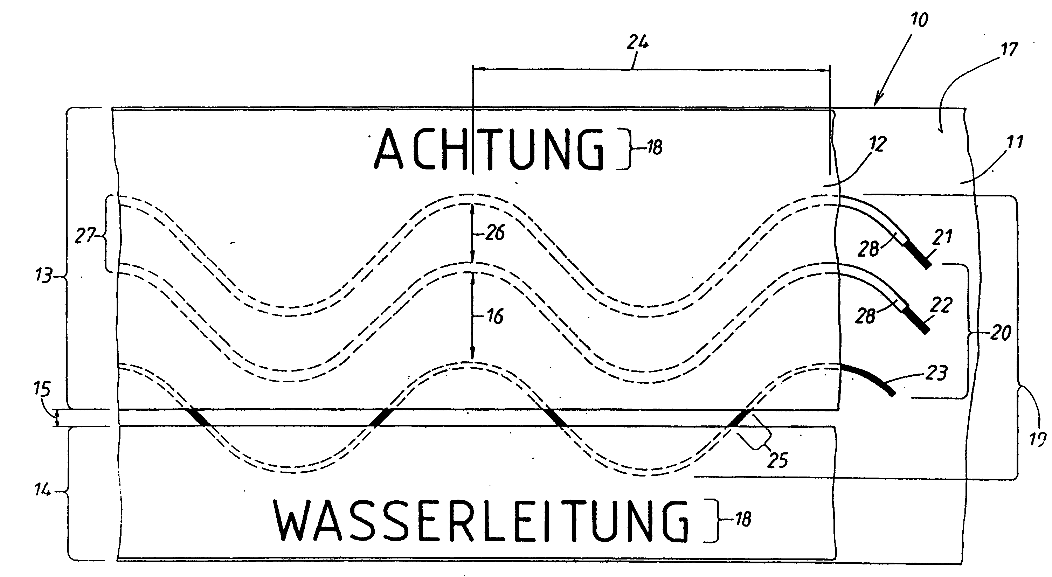

Weitere Maßnahmen und Vorteile der Erfindung ergeben sich aus den Unteransprüchen, der nachfolgenden Beschreibung und der Zeichnung. In der Zeichnung ist ein Teilstück des erfindungsgemäßen Trassenbandes in Draufsicht, in nicht maßstabsgerechter Vergrößerung und teilweise im Ausbruch, dargestellt.

Das Trassenband umfaßt zwei, den äußeren Bandkörper 10 bildende Streifen 11, 12, die aus elektrisch nicht leitendem Material, vorzugsweise Kunststoff, wie Polyäthylen, bestehen. Die Streifen 11, 12 könnten- Flächengebilde jeder anderen, an sich bekannter Konsistenz sein, z. B. Textilgebilde aus Fäden oder Strängen, wie Gewebe oder Gewirke. Im vorliegenden Fall handelt es sich um Kunststoffbahnen großer Reißfestigkeit mit mehr als 10 N pro mm². Die Kunststoffbahnen besitzen auch eine gute Dehnung, deren obere Grenze allerdings kleiner als 200 % ist. Das erlaubt, auf das Trassenband einen hohen Zug von z. B. 20 Tonnen auszuüben.

Im vorliegenden Fall ist der eine Streifen 11 durchgehend ausgebildet und dient als Tragstreifen für einen Satz 20 von zueinander parallel verlegten Leitern 21, 22, 23 aus Kupfer. Der andere Streifen 12 ist mehrteilig ausgebildet; er besteht die im vorliegenden Fall aus zwei Streifenteilen 13, 14 und soll wegen seiner Abdeckfunktion der Kupferleiter als "Deckstreifen" bezeichnet werden. Die beiden Streifen 11, 12 liegen flächig aneinander an und sind fest miteinander verbunden. Diese Verbindung kann in jeder an sich bekannten Weise erfolgen, z. B. durch Nähen, Verkleben oder Verschweißen. Im vorliegenden Fall wird eine Klebeverbindung verwendet. Die drei Leiter 21 bis 23 befinden sich also im Bandinneren 19. Die beiden Streifenteile 13, 14 laufen parallel zueinander, schließen aber zwischen sich eine Abstandslücke 15 ein. Der eine Streifenteil 13 ist ca. doppelt so breit wie der andere 14. Dadurch erhält die Abstandslücke 15 eine besondere außermittige Lage im Bandkörper 10.

Die Leiter 21, 22, 23 sind Drähte, die in Längsrichtung des Bandes sinusförmig verlaufen. Die eingezeichnete Periodenlänge 24 der Sinuslinie ist übertrieben kurz dargestellt. Die drei Drähte 21 bis 23 verlaufen zueinander parallel und bilden daher einen konformen Sinus-Zug 20 im Bandkörper 10. Dieser Sinus-Zug 20 befindet sich im Bandinneren zwischen den beiden Streifen 11, 12 und ist dort durch die Streifen-Verbindung, nämlich in vorliegenden Fall durch die Klebeverbindung, in seiner Sinus-Form gesichert. Die Leiter 21 bis 23 haben aber einen teilweise unterschiedlichen Aufbau.

Der eine Leiter 21 ist oberflächig nicht umhüllt, sondern nackt. Er liegt also blank und soll daher nachfolgend kurz "blanker Draht" bezeichnet werden. Dieser blanke Draht ist im Übergangsbereich zwischen den beiden Streifenteilen 13, 14 vom Deckstreifen 12 angeordnet, weshalb er die Abstandslücke 15 mit Drahtstücken 25 kreuzt. Im Gebrauchsfall des Trassenbandes entsteht an diesen Stellen 25 ein elektrischer Kontakt mit dem Erdboden. Das genügt zwar für den Erdkontakt, doch könnte bedarfsweise eine vollflächige Erdfühligkeit des blanken Drahts 21 vorliegen. Dafür verwendet man entsprechend durchlässige Streifen 11, 12, z. B. einen porösen Deckstreifen 12 oder einen Textilstreifen. Anstelle der Abstandslücke 15 können Aussparungen jeglicher Form und Größe vorgesehen sein, die den blanken Draht 21 mindestens stellenweise offen legen. Zur Erhöhung der Erdfühligkeit des blanken Drahts 21 könnten auch bei Verwendung einer Kunststoffbahn Perforationen für eine gute Erdfühligkeit dienen. In der Regel genügt aber die Abstandslücke 15 als Druchlaß für einen elektrischen Erdkontakt mit dem blanken Kupferdraht im Bandinneren.

Mindestens einer der weiteren Leiter 22, 23, im vorliegenden Fall aber beide, sind von einer elektrischen Isolationsschicht 28 umschlossen, weshalb sie nachfolgend kurz "ummantelte Drähte" bezeichnet werden sollen. Die Isolationsschicht 28 der ummantelten Drähte 22, 23 verhindert einen Erdkontakt, selbst wenn das Bandinnere 19 wegen geeigneter Durchlässigkeit im Streifen 11 und/oder 12 elektrisch leitend ist. Sie sind in einem relativ kleinen Abstand 26 zueinander angeordnet und dienen im Gebrauchsfall zum Anschluß eines Impuls-Echo-Meßgerätes, das zu der bereits oben erwähnten Ortung eines Band-Risses od. dgl. durch eine Reflexionsmessung dient. In diesem Fall wird zwischen die beiden ummantelten Kupferdrähte 21, 22 kurzzeitig eine Spannung angeleitet, die an der Stelle des Risses, das als offenes Kabelende wirkt, reflektiert wird. Aus der Laufzeit des Impuls-Echos ist die Entfernung des Risses oder einer anderen Drahtbeschädigung im Trassenband berechenbar.

Die ummantelten Drähte 22, 23 fördern die Meßgenauigkeit und erhöhen das Meßergebnis beim passiven Ortungsverfahren, wie bereits erwähnt wurde. Sie dienen aber vor allem zum Durchführen eines aktiven Ortungsverfahrens auf galvanische oder induktive Weise, wie es oben ebenfalls bereits erläutert worden ist. Das passive Ortungsverfahren wird vor allem an dem erdfühlig verlegten blanken KupferLeiter 21 ausgeführt. Dieser blanke Draht 21 ist gegenüber dem Leiter-Paar 27 in einem gegenüber dem Paar-Abstand 26 in größerem Abstand 16 angeordnet.

Der Tragstreifen 11 besteht aus einer besonders farbintensiv ausgebildeten Kunststoffbahn, welche die Warnungsfunktion des fertigen Trassenbandes erhöht, weil in seinem Bereich die Leitungen im Erdboden liegen. Die Innenfläche 17 des Tragstreifens 11 ist mit graphischen oder alphanumerischen Aufschriften 18 versehen, welche auf die Art der unter dem Trassenband liegenden spezifischen Leitungen hinweisen können. Der Deckstreifen 12 ist eine transparente Kunststoffbahn, welche nach ihrer Klebeverbindung die auf der Innenfläche 17 des Tragstreifens 11 befindlichen Aufschriften 18 schützt.

## Patentansprüche

1. Ortbares Trassenband zum Auffinden von parallel dazu im Erdboden vergrabenen, insbesondere nichtmetallischen Leitungen, wie metallfreien Kabeln, Lichtwellenleitungen, Gas- oder Wasserleitungen aus Kunststoff od. dgl., mittels eines Ortungsgeräts,
mit zwei den äußeren Bandkörper (10) bildenden Streifen (11, 12) aus elektrisch nicht leitendem Material,
die flächig aneinander liegen und fest miteinander verbunden sind,
wobei mindestens einer der beiden Streifen (11, 12) und/oder ihre Streifenverbindung wenigstens stellenweise Durchlässe (15) für einen elektrischen Erdkontakt mit dem Bandinneren (19) aufweisen,
und mit mindestens zwei metallischen, elektrischen Leitern (22, 23) im Bandinneren (19),
die zwischen den beiden Streifen (11, 12) angeordnet und durch die Streifenverbindung in ihrer Lage im Bandkörper (10) gesichert sind,
**dadurch gekennzeichnet,**
daß die metallischen Leiter (21, 22, 23) aus Kupfer gefertigt sind und
daß zwar wenigstens einer der Leiter (blanker Leiter 23) oberflächig nicht umhüllt ist, also blank liegt,
aber mindestens ein weiterer Leiter (ummantelter Leiter 21, 22) jeweils in sich, von einer elektrischen Isolationsschicht (28) ummantelt ist.

2. Trassenband nach Anspruch 1 zur Ortung mittels eines auf Längstwellen (VLF) externer Sender ansprechenden passiven Ortungsverfahrens,
**dadurch gekennzeichnet,**
daß der ummantelte Leiter (21, 22) sowohl beim passiven Ortungsverfahren durch kapazitive Kopplung mit dem Erdboden mitwirkt und die am blanken Leiter (23) erlangbaren Ortungsergebnisse verbessert,
als auch ein aktives Ortungsverfahren für das Trassenband anzuwenden gestattet durch eine galvanische oder durch eine induktive Ankoppelung an eine die Meßenergie liefernde interne Quelle.

3. Trassenband nach Anspruch 1 oder 2, dadurch gekennzeichnet, daß ein Leitungs-Paar (27) aus zwei nebeneinanderliegenden ummantelten Leitern (21, 22) vorgesehen ist.

4. Trassenband nach Anspruch 3, dadurch gekennzeichnet, daß das Leitungs-Paar (27) nicht nur das passive bzw. -aktive - Ortungsverfahren verbessert,
sondern durch Reflexionsmessung mittels eines elektrischen Impuls-Echo-Meßgerätes eine Beschädigung im Trassenband, wie einen Band-Riß, zu lokalisieren gestattet.

5. Trassenband nach einem oder mehreren der Ansprüche 1 bis 4, dadurch gekennzeichnet, daß der eine Streifen einen durchgehenden Tragstreifen (11) für den ganzen Satz (20) der Leiter (21, 22, 23) bildet,
während der andere Streifen ein mit wenigstens einer Unterbrechung (15) versehener Deckstreifen (12) ist.

6. Trassenband nach Anspruch 5, dadurch gekennzeichnet, daß der Deckstreifen (12) aus zwei parallelen Streifenteilen (13, 14) mit einer dazwischenliegenden Abstandslücke (15) besteht.

7. Trassenband nach Anspruch 6, dadurch gekennzeichnet, daß die beiden Streifenteile eine zueinander unterschiedliche Breite aufweisen.

8. Trassenband nach einem oder mehreren der Ansprüche 1 bis 7, dadurch gekennzeichnet, daß die Leiter aus drei Drähten (21, 22, 23) bestehen, nämlich aus einem einzigen blanken Draht (23) und einem Paar (27) von ummantelten Drähten (21, 22).

9. Trassenband nach einem oder mehreren der Ansprüche 1 bis 8, dadurch gekennzeichnet, daß die Drähte (21, 22, 23) sinusförmig entlang des Bandes angeordnet sind,
wobei der blanke Draht (23) die Abstandslücke (15) zwischen den Streifenteilen (13, 14) des Deckstreifens (12) kreuzt.

10. Trassenband nach Anspruch 9, dadurch gekennzeichnet, daß die Drähte (21, 22, 23) im wesentlichen parallel zueinander verlaufen und einen konformen Sinus-Zug (20) im Bandkörper (10) bilden.

11. Trassenband nach einem oder mehreren der Ansprüche 1 bis 10, dadurch gekennzeichnet, daß die Innenfläche (17) des einen Streifens, insbesondere des Tragstreifens (11), Aufschriften (18) trägt und der andere Streifen, insbesondere der Deckstreifen (12), durchsichtig ausgebildet ist und die Aufschriften (18) schützt.

12. Trassenband nach einem oder mehreren der Ansprüche 1 bis 8, dadurch gekennzeichnet, daß der Tragstreifen (11) mit dem Deckstreifen (12) durch Kleben verbunden ist.

## Claims

1. Locatable route-marking tape for locating in particular non-metallic pipes and cables buried parallel to one another in the ground, such as metal-free cables, optical-fibre cables, plastic gas or water pipes, by means of a detector,
comprising two strips (11, 12) of electrically nonconductive material, which form the outer tape body (10),
lie flat against one another and are firmly connected to one another,
wherein at least one of the two strips (11, 12) and/or their strip connection at least in places have passages (15) for an electrical earth contact with the tape interior (19),
and comprising at least two metal electric conductors (22, 23) in the tape interior (19),
which are disposed between the two strips (11, 12) and held in position in the tape body (10) by the strip connection,
characterized in
that the metal conductors (21, 22, 23) are made of copper and
that while at least one of the conductors (plain conductor 23) has an exposed surface, i.e. is bare,
at least one further conductor (sheathed conductor 21, 22) is, in each case independently, covered by an electrical insulating layer (28).

2. Route-marking tape according to claim 1 for location by means of a passive locating method responsive to myriametric waves (VLF) of external transmitters,
characterized in
that the sheathed conductor (21, 22) both cooperates in the case of the passive locating method through capacitive coupling with the ground and improves the location results obtainable at the plain conductor (23),
and also allows the use of an active method of locating the route-marking tape through a conductive or an inductive coupling to an internal source supplying the measuring energy.

3. Route-marking tape according to claim 1 or 2, characterized in that a line pair (27), which comprises two sheathed conductors (21, 22) lying alongside one another, is provided.

4. Route-marking tape according to claim 3, characterized in that the line pair (27) not only improves the passive and/or active locating method,
but also, through reflection measurement by means of an electrical pulse-type echometer, allows the detection of damage to the route-marking tape, such as a tear in the tape.

5. Route-marking tape according to one or more of claims 1 to 4, characterized in that the one strip forms a continuous supporting strip (11) for the entire set (20) of conductors (21, 22, 23),
while the other strip is a cover strip (12) provided with at least one interruption (15).

6. Route-marking tape according to claim 5, characterized in that the cover strip (12) comprises two parallel strip parts (13, 14) with an interlying spacing gap (15).

7. Route-marking tape according to claim 6, characterized in that the two strip parts differ in width.

8. Route-marking tape according to one or more of claims 1 to 7, characterized in that the conductors comprise three wires (21, 22, 23), namely a single bare wire (23) and a pair (27) of sheathed wires (21, 22).

9. Route-marking tape according to one or more of claims 1 to 8, characterized in that the wires (21, 22, 23) are disposed sinusoidally along the tape,
wherein the bare wire (23) crosses the spacing gap (15) between the strip parts (13, 14) of the cover strip (12).

10. Route-marking tape according to claim 9, characterized in that the wires (21, 22, 23) extend substantially parallel to one another and form a conformal sinusoidal trace (20) in the tape body (10).

11. Route-marking tape according to one or more of claims 1 to 10, characterized in that the inner surface (17) of the one strip, in particular of the supporting strip (11), bears inscriptions (18) and the other strip, in particular the cover strip (12), is transparent and protects the inscriptions (18).

12. Route-marking tape according to one or more of claims 1 to 8, characterized in that the supporting strip (11) is joined to the cover strip (12) by glueing.

## Revendications

1. Ruban de signalisation repérable, servant à identifier des câbles ou des conduites, en particulier non métalliques, enfouis dans le sol et parallèles au ruban, tels que des câbles exempts de métaux, des lignes pour fibres optiques, des tuyauteries pour gaz ou eau, en matière plastique ou analogues, au moyen d'un appareil de localisation,
avec deux bandes (11, 12), constituant le corps de ruban (10) extérieur, réalisées en un matériau non conducteur de l'électricité,
placées à plat l'une sur l'autre et reliées ensemble rigidement,
au moins l'une des deux bandes (11, 12) et/ou sa liaison de bandes présentant au moins par endroit des passages (15) pour un contact électrique à la terre avec l'intérieur de ruban (19),
et avec au moins deux conducteurs électriques (22, 23), métalliques, installés à l'intérieur du ruban (19),
qui sont disposés entre les deux bandes (11, 12) et sont bloqués en position dans le corps de ruban (10) par la liaison entre les bandes,
caractérisé en ce que
les conducteurs métalliques (21, 22, 23) sont fabriqués en cuivre, et
en ce que, précisément, au moins l'un des conducteurs (conducteur nu 23) n'est pas gainé en surface, donc est nu,
mais qu'au moins un autre conducteur (conducteur non gainé 21, 22) est chaque fois gainé en soi, par une couche d'isolation électrique (28).

2. Ruban de signalisation suivant la revendication 1 pour le repérage au moyen d'un procédé de localisation passif réagissant à des émetteurs externes fonctionnant sur des grandes ondes (VLF),
caractérisé en ce que,
le conducteur non gainé (21, 22) non seulement coopère lors du procédé de localisation passif par un couplage capacitif avec le sol et améliore les résultats de localisation pouvant être atteints sur le conducteur nu (23),
mais aussi permet d'appliquer un procédé de localisation actif du ruban de signalisation par un couplage galvanique, ou inductif, à une source interne fournissant l'énergie de mesure.

3. Ruban de signalisation suivant la revendication 1 ou 2, caractérisé en ce qu'est prévue une paire de conducteurs (27), constituée de deux conducteurs (21, 22) gainés, situés l'un à côté de l'autre.

4. Ruban de signalisation suivant la revendication 3, caractérisé en ce que la paire de conducteurs (27) non seulement améliore le procédé de localisation passif ou actif,
mais permet aussi, par une mesure de réflexion, en utilisant un appareil de mesure à écho d'impulsions électriques, de localiser un endommagement survenu dans un ruban de signalisation, tel qu'une fissuration du ruban.

5. Ruban de signalisation suivant l'une ou plusieurs revendications 1 à 4,
caractérisé en ce qu'une première bande constitue une bande support (11) continue pour la totalité du jeu (20) des conducteurs (21, 22, 23),
tandis que l'autre bande constitue une bande de couverture (12) munie d'au moins une interruption (15).

6. Ruban de signalisation suivant la revendication 5, caractérisé en ce que la bande de couverture (12) est constituée de deux parties de bandes (13, 14) parallèles, ayant un intervalle d'espacement (15) intermédiaire.

7. Ruban de signalisation suivant la revendication 6, caractérisé en ce que les deux parties de bande présentent une largeur qui diffère l'une de l'autre.

8. Ruban de signalisation suivant l'une ou plusieurs des revendications 1 à 7, caractérisé en ce que les conducteurs sont constitués de trois fils métalliques (21, 22, 23), à savoir, un fil nu unique (23) et une paire (27) de fils non gainés (21, 22).

9. Ruban de signalisation suivant l'une ou plusieurs revendications 1 à 8,
caractérisé en ce que les fils (21, 22, 23) sont disposés selon un tracé sinusoïdal le long du ruban,
le fil nu (23) croisant l'intervalle d'espacement (15) existant entre les parties de bande (13, 14) de la bande de recouvrement (12).

10. Ruban de signalisation suivant la revendication 9, caractérisé en ce que les fils (21, 22, 23) sont sensiblement parallèle l'un à l'autre et constituent un tracé sinusoïdal (20) conforme dans le corps de ruban (11).

11. Ruban de signalisation suivant l'une ou plusieurs des revendications 1 à 10, caractérisé en ce que la surface intérieure (17) d'une première bande, en particulier de la bande support (11), porte des inscriptions (18) et l'autre bande, en particulier la bande de couverture (12), est transparente et protège les inscriptions (18).

12. Ruban de signalisation suivant l'une ou plusieurs des revendications 1 à 8, caractérisé en ce que la bande support (11) est reliée par collage à la bande de recouvrement (12).
